# EUROPEAN PATENT APPLICATION

(11) **EP 3 640 065 A1**
(43) Date of publication of application: **22.04.2020**
(21) Application number: 19185411.6
(22) Date of filing: 10.07.2019
(51) Int. Cl.: B60J 5/06

(54) **TARPAULIN TIGHTENING SYSTEM, ESPECIALLY FOR TARPAULIN COVERING A TRANSPORT SEMI-TRAILER AND A TRANSPORT SEMI-TRAILER**

(30) Priority: 18.10.2018 PL 42744718
(71) Applicant: "WIELTON" Spolka Akcyjna, 98-300 Wielun (PL)
(72) Inventor: Pisniak, Michal, 98-350 Biala (PL)
(74) Representative: AOMB Polska Sp. z.o.o.

(57) **Abstract**

The present invention relates to a tarpaulin tightening system, especially for a tarpaulin (1) covering a transport semi-trailer, said tarpaulin (1) having at least one cut-out (2) at one of the ends, comprising a clamping tube (5) attachable to at least one end of the tarpaulin (1), the clamping tube (5) having a clamping tube gap (5b) and a clamping tube channel (5a), which are used to place the end (4) of the tarpaulin (1) therein, the system additionally comprises a catch (3) connectable to the tarpaulin (1) in the cut-out (2) area, and a member for hooking the catch (3), especially in the form of a pin (7), placed in the clamping tube channel (5a).

## Description

### Field of the invention

The present invention relates to a tarpaulin tightening system, especially for tarpaulin covering a transport semi-trailer and a transport semi-trailer equipped with a tarpaulin covering the loading space with a tightening system. The system is particularly applicable to tarpaulin tightening in semi-trailers with a raised roof.

### Prior art

In the prior art, tarpaulins are commonly known for creating various types of covers, including, e.g., covers for transport semi-trailers. Commonly known are also mechanisms for tightening/tensioning such tarpaulins, making use of a longitudinal tube in which one of the ends of the tarpaulin is placed and which, by placing in and rotating with a suitable mechanism, evenly tension/tighten the tarpaulin.

In recent years, a need has also emerged for a tarpaulin that would be suitable for use in covering objects with variable dimensions, e.g., transport semi-trailers with adjustable roof height. Until now, for such height-variable objects, tarpaulins with cut-outs were used, which allowed a part of the tarpaulin to be rolled up for the lowest setting (e.g., the most-lowered roof of the semi-trailer). Unfortunately, with higher settings (e.g., with the semi-trailer roof almost most raised), such cut-outs in the tarpaulin create a hole allowing for penetration of moisture, dust, sand, it is possible that small items fall out of the semi-trailer covered with such a tarpaulin or rodents get inside, as well as the aerodynamic resistance increases while transporting semi-trailers covered with such tarpaulins.

### Summary of the invention

The objective of the invention is therefore to provide a solution with a tarpaulin tightening system that will allow the height of the tarpaulin-covered object to be adjusted, the tarpaulin to be properly sealed, and will not cause an unnecessary increase in the aerodynamic resistance.

According to a first aspect, the present invention relates to a tarpaulin tightening system, especially for a tarpaulin covering a transport semi-trailer, said tarpaulin having at least one cut-out at one of the ends, comprising a clamping tube attachable to at least one end of the tarpaulin, the clamping tube having a clamping tube gap and a clamping tube channel, which are used to place the end of the tarpaulin therein. The system additionally comprises a catch connectable to the tarpaulin in the cut-out area, and a member for hooking the catch, especially in the form of a pin, placed in the clamping tube channel. Preferably, the pin has a pin guide member, with transverse dimensions similar to the transverse dimensions of the clamping tube channel and greater than the size of the clamping tube gap, and a pin core, with transverse dimensions smaller than the pin guide member.

Preferably, the catch is connected to the tarpaulin by a permanent connection, in particular by welding, gluing, riveting or sewing. The catch can also be connected to the tarpaulin by means of a detachable connection, in particular by zipper, cable or rod, passing through openings in the catch and tarpaulin, or by a screw connection.

Preferably, the member for hooking the catch, in particular the pin, consists of two parts, in particular two halves, the two parts having at least one transverse dimension close to and smaller than the width of clamping tube gap, and the two parts are provided with means for connecting these parts to each other, in particular in the form of threaded holes enabling them to be screwed with each other using a screw.

Preferably, the catch is in the form of an oblong loop, which is connected to the tarpaulin by a strip of material. Alternatively, the catch is in the form of a loop formed from a piece of cable, and the member for hooking the catch is in the form of a hook placed on a cylindrical base.

If the tarpaulin has more than one catch, the clamping tube channel comprises more than one member for hooking the catch, preferably in a number equal to the number of catches, in particular more than one pin.

Preferably, the pin arranged in the clamping tube channel has a pin core terminated by a chamfered or rounded pin tip.

In a preferred embodiment, the pin is positioned in the clamping tube channel with the pin tip facing up, but it is also possible to arrange the pin in the clamping tube channel with the pin tip pointing downwards.

The catch hooking member is preferably made of metal, plastic or of interconnected metal and plastic. The catch can be made of plastic, in particular of a material identical to the material from which the tarpaulin is made.

Preferably, the catch is made as an integral part of the tarpaulin.

Preferably, the catch in the form of a loop is made of a steel cable.

In another practical embodiment the catch is made of a cable threaded through openings arranged along the end of the tarpaulin, and the clamping tube channel comprises more than one member for hooking the catch, in the form of a hook placed on the cylindrical base.

According to a second aspect, the present invention relates to a transport semi-trailer provided with a tarpaulin covering the loading space and having the above-described tarpaulin tightening system.

The tensioning system is particularly suited for a semi-trailer with a raised roof.

### Brief description of the drawings

In the following the invention is illustrated in a preferred embodiment with reference to the attached drawing, wherein:
- Fig. 1 -: shows a typical tarpaulin with marked end and cut-outs;
- Fig. 2 -: shows a part of the tarpaulin of Fig. 1 with visible catch;
- Fig. 3 -: shows the same part of the tarpaulin as Fig. 2, in a slightly rotated view;
- Fig. 4 -: shows a typical pin for fastening the tarpaulin's catch;
- Fig. 5 -: shows the clamping tube with marked channel and gap, as well as with the pin arranged inside the tube channel;
- Fig. 6a -: shows the cross-section of the clamping tube with the pin arranged in it;
- Fig. 6b -: shows an overview view of the clamping tube with the pin arranged in it;
- Fig. 6c -: shows a top view of the clamping tube with the pin present in the tube channel;
- Fig. 7 -: shows the tarpaulin hooked on the clamping tube with the catch hooked on the pin, and
- Fig. 8 -: shows an enlarged view of the tarpaulin's catch hooked on the pin of Fig. 7.

### Detailed description of a preferred embodiment of the invention

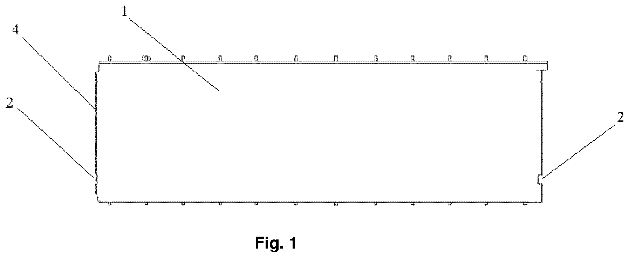

The invention is mainly used in transport during the operation of semi-trailers, especially semi-trailers with variable/adjustable height. In a preferred embodiment, Fig. 1 shows a typical tarpaulin 1 having visible two cut-outs 2 at the end of the tarpaulin 4. When the tarpaulin 1 is mounted on the semi-trailer with a maximally lowered roof, the material of the tarpaulin 1 at the height of the cut-outs 2 and along the tarpaulin 1 can be rolled up and secured so that it does not stand out. When, however, the roof of the semi-trailer is lifted, e.g., to a position close to its maximum height, the material of the tarpaulin 1 at the height of the cut-outs 2 and along the tarpaulin 1 is at least partially straightened, but due to the presence of the cut-outs 2 - in their area it is not fixed in the clamping tube 5 - a hole arises in the semi-trailer's shell, through which moisture can penetrate inside the semi-trailer, the aerodynamic resistance can increase and there is a risk of external interference with goods inside the semi-trailer (foreign matter may get inside or goods placed inside may fall out through the hole).

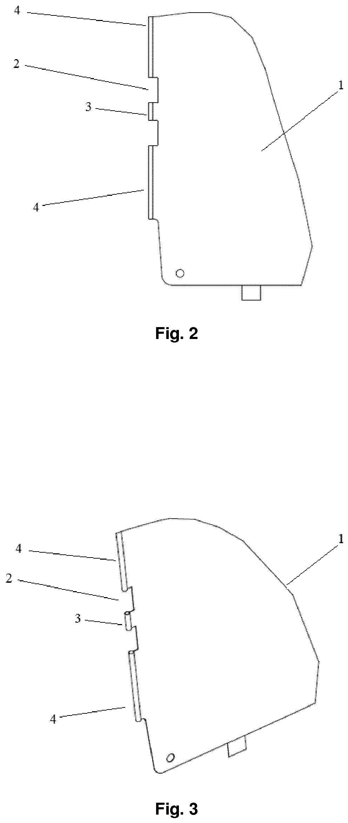

The inventors have enriched the existing solutions by adding to the tarpaulin 1 a catch 3 located in the area of the cut-out 2, so that the cut-out 2 separating the catch 3 from the end of the tarpaulin 4 is present on both sides of the catch 3 (see Figs. 2 and 3).

The catch 3 visible in Figs. 2 and 3 is in the form of an oblong loop connected by a strip of material to the tarpaulin 1, which loop preferably arises from a rectangular piece of material joined along one of the sides. It is obvious that the shape thus described is not the only possibly applicable shape of the catch 3 and the catch 3 may have a geometrically different form, e.g. an hourglass-like shape with joined bases (forming a loop in a side view similar to a trapezoid), a shape formed by joining the vertex of a triangle with its base (forming loops seen from the sides as trapezoids, but of different sizes), a shape formed by joining two semi-circles with their bases. It is also possible to use the catch 3 formed by attaching to the tarpaulin 1 a loop formed from a piece of rope/cable.

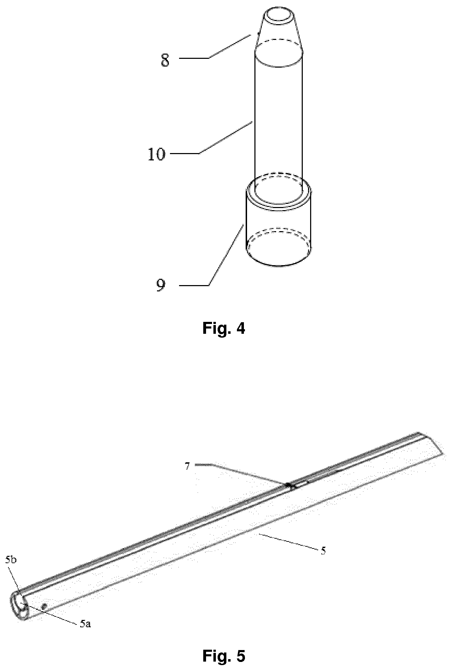

The catch 3 is designed to cooperate with a member by which the catch 3 can be hooked, in particular with the pin 7 shown in Fig. 4. The pin 7 has three essential parts:
- a guide member 9 which has transverse dimensions close to the width of the clamping tube channel 5a, in particular slightly smaller to allow the pin 7 to slide in the clamping tube channel 5a, but larger than the width of the clamping tube gap 5b - so that the pin 7 is prevented from falling out through the clamping tube gap 5b;
- a core 10 which has transverse dimensions smaller than the dimensions of the guide member 9 and which is preferably in the form of a cylinder that allows the catch 3 to be hooked on it; and
- a tip 8, which is a narrowed (e.g., conically or by rounding) part of the pin core 10 on the other side of the pin 7 than the guide member 9, the role of which is to provide a more comfortable hooking/removing the catch 3.

The member allowing the catch 3 to be hooked, in particular the pin 7, is shown in Fig. 5 as a shape with circular cross-sections with one symmetry axis, but obviously it is possible to use pins 7 with cross-sections other than circular, as required. For example, it is possible to use a pin 7 whose core 10 would be eccentric with respect to the guide member 9. In another embodiment, a pin 7 with polygonal cross-sections, e.g., hexagonal or octagonal, can be used. As a rule, in order to reduce the wear (scuffing) of the interior of the clamping tube channel 5a, it is recommended to use a pin 7 with a cross-section similar to that of the interior of the clamping tube channel 5a.

The pin 7 can be made of various materials that would ensure a sufficiently high strength of the pin 7, so that neither large deformation of the pin 7 nor a risk of sliding the catch 3 from the pin 7 would occur while tensioning the tarpaulin 1 with the catch 3 hooked on the pin 7 (so that the pin tip 8 does not protrude beyond the clamping tube gap 5b). Preferably, the pin 7 can be made of metal, e.g., steel, plastic, or a combination of plastic and metal, e.g., having a steel core surrounded by plastic. In other preferred embodiments, the pin 7 can be made of a metal, e.g., steel, coated with a protective layer in the form of a paint or lacquer coating.

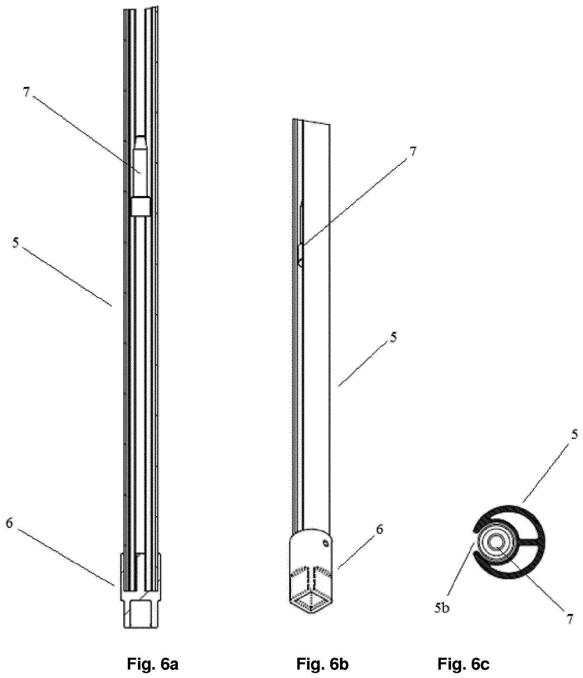

A pin 7 placed in the clamping tube 5 in its channel 5a is shown in Figs. 5, 6a (in a cross-section with a visible connecting member 6 of the tensioning mechanism), 6b (in an overview view with a visible connecting member 6 of the tensioning mechanism), and 6c (in a top view).

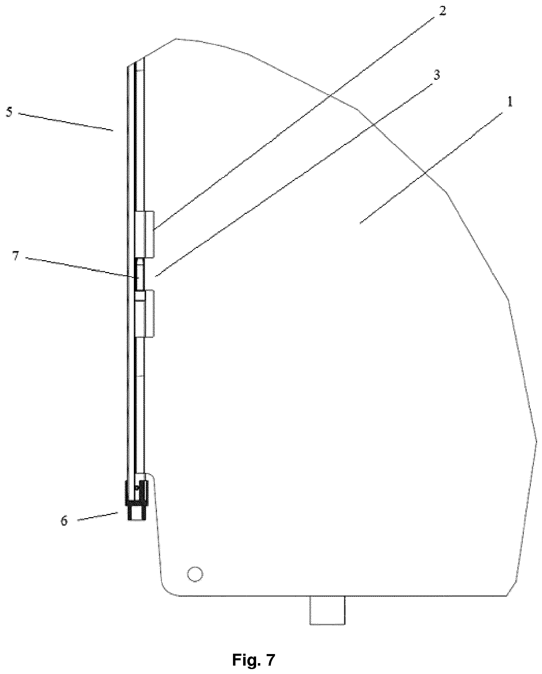

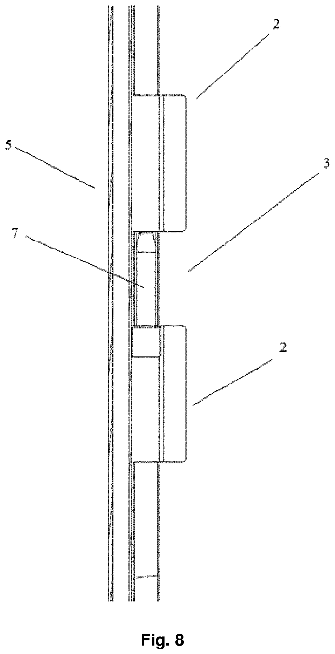

Figs. 7 and 8 show (at a distance and in enlarged view of the area with the pin 7 and the catch 3, respectively) a vertically unfolded/stretched tarpaulin 1, whose end 4 is placed in the channel 5a of the clamping tube 5, with the connecting member 6 present at the lower end of the clamping tube 5, and with the catch 3 hooked on the pin 7 present in the channel 5a of the clamping tube 5. Due to this protection of the tarpaulin 1, the previously potentially loose part of the tarpaulin 1 acquires an additional fastening which after tensioning the tarpaulin 1 ensures its tightness in this area (especially against moisture), reduces the aerodynamic resistance while driving (by levelling the tarpaulin) and protects the interior of the semi-trailer covered with such tarpaulin 1 (and especially goods in the semi-trailer) by covering the undesired opening in the tarpaulin 1 (thus blocking the possibility of falling off the goods or getting undesired objects, e.g., gravel, rodents, etc., into the inside of the semi-trailer).

The pin 7 in the channel 5a of the clamping tube 5 can be displaced, but its displacement is limited, especially from above and from below by the end of the tarpaulin 4.

Although in the figures the pin 7 is shown in the upright position with the pin tip 8 pointing upwards, it can be placed in the clamping tube 5 upside down, with the pin tip 8 pointing downwards. This will result in a slightly different order of hooking the catch 3 on the pin 7 - instead of simply pulling the catch over the pin core 10, it would first be necessary to move the pin 7 up, insert the catch 3 into the channel 5a of the clamping tube 5, and then lower the pin 7 downwards so that it slides from the top into the inside of the catch 3. The catch 3 can be connected to a tarpaulin 1 in various ways, both permanently and detachably. In the case of permanent joints, it can be connected to the tarpaulin 1, e.g., by welding, gluing, sewing, riveting, etc., according to the type of materials from which the tarpaulin 1 and the catch 3 are made. In turn, in the case of detachable connections, the catch 3 can be joined with the tarpaulin 1, e.g., with the use of a zipper, screws, by cable/rope (threaded through holes in the catch 3 and the tarpaulin 1).

The advantage of the detachable connections is that they allow for adjusting the height at which the catch 3 is located. This can be particularly important for semi-trailers with very broad height adjustment options, as well as allow for one type of tarpaulin 1 to be used for covering semi-trailers with different heights, thus reducing the cost of re-designing the tarpaulin 1 depending on the type of a semi-trailer.

Preferably, the catch 3 can be an integral part of the tarpaulin 1 and be made of the same material sheet as the tarpaulin 1.

Preferably, the tarpaulin 1 can be originally intended for use without having to make a cut-out 2 therein, e.g., for covering the semi-trailers without height adjustment option, after which it can be adapted to tensioning with the use of the catch 3 - this would require to make a cut-out 2 in the tarpaulin 1, fasten the catch 3 to the tarpaulin 1, and place a hooking member, e.g., a pin 7, in the clamping tube 5.

It may also be preferable to use the tarpaulin 1 with a relatively long (in the vertical direction) cut-out 2 and to place several (e.g., two, three, four or five) catches 3 on the tarpaulin 1 - in this configuration the tarpaulin 1 would show a particularly advantageous freedom of height adjustment of the tarpaulin 1 (while changing the height of the semi-trailer body). This would obviously involve the use of appropriately greater number of pins 7 (and possibly, it may be necessary to point them with the tips 8 downwards). Although in some preferred embodiments the catch 3 is, as a rule, in the form of an oblong, at least partially elastic loop (in order to pass through the gap 5b of the clamping tube 5), in other preferred embodiments the catch 3 may be a loop formed from a cable/rope, or even just a piece of cable/rope. Such an implementation would allow a member other than the pin 7 to be used for hooking the catch 3, e.g., in the form of a hook on a cylindrical base (similar in shape and dimensions to the pin guide member 9). The use of the catch 3 made of a cable/rope could also enable another connection of the catch 3 to the tarpaulin 1, e.g., by threading such a cable/rope through the openings in the tarpaulin 1 (thus providing in a simple manner a large number of catches 3).

In a preferred embodiment shown in Fig. 1, the tarpaulin 1 covers the side of a transport semi-trailer from the top edge to the bottom one as one sheet of material, but in another preferred embodiment the tarpaulin 1 may consist of a greater number of material sheets, e.g., of two sheets, of which one sheet would cover the greater part of the side of the semi-trailer (from the top to almost the very bottom, to the bottom of the cut-out 2), and the second sheet of material would cover the lower part of the semi-trailer (below the cut-out 2). In such a configuration, the use of the invention is still possible - the catch 3 can equally well serve its purpose in providing tension to the tarpaulin 1 by hooking, e.g., the pin 7.

### List of markings used in the drawing:

- 1: - tarpaulin
- 2: - cut-out
- 3: - catch/eye/handle
- 4: -end of the tarpaulin
- 5: - clamping/tensioning tube
- 5a: - clamping/tensioning tube channel
- 5b: - clamping/tensioning tube gap
- 6: - connecting member
- 7: - pin
- 8: -pin tip
- 9: - pin guide member
- 10: - pin core

## Claims

1. A tarpaulin tightening system, especially for a tarpaulin (1) covering a transport semi-trailer, said tarpaulin (1) having at least one cut-out (2) at one of the ends, comprising a clamping tube (5) attachable to at least one end of the tarpaulin (1), the clamping tube (5) having a clamping tube gap (5b) and a clamping tube channel (5a), which are used to place the end (4) of the tarpaulin (1) therein, **characterised in that** it additionally comprises a catch (3) connectable to the tarpaulin (1) in the cut-out (2) area, and a member for hooking the catch (3), especially in the form of a pin (7), placed in the clamping tube channel (5a).

2. The tarpaulin tightening system according to claim 1 **wherein** the pin (7) has a pin guide member (9), with transverse dimensions similar to the transverse dimensions of the clamping tube channel (5a) and greater than the size of the clamping tube gap (5b), and a pin core (10), with transverse dimensions smaller than the pin guide member (9).

3. The tarpaulin tightening system according to claim 1 or 2 **wherein** the catch (3) is connected to the tarpaulin (1) by a permanent connection, in particular by welding, gluing, riveting or sewing.

4. The tarpaulin tightening system according to claim 1 or 2 **wherein** the catch is connected to the tarpaulin (1) by means of a detachable connection, in particular by zipper, cable or rod, passing through openings in the catch (3) and the tarpaulin (1), or a screw connection.

5. The tarpaulin tightening system according to claim 1 **wherein** the member for hooking the catch (3), in particular the pin (7), consists of two parts, in particular two halves, the two parts having at least one transverse dimension close to and smaller than the width of clamping tube gap (5b), and the two parts are provided with means for connecting these parts to each other, in particular in the form of threaded holes enabling them to be screwed with each other using a screw.

6. The tarpaulin tightening system according to claim 1 **wherein** the catch (3) is in the form of an oblong loop, which is connected to the tarpaulin (1) by a strip of material.

7. The tarpaulin tightening system according to claim 1 **wherein** the catch (3) is in the form of a loop formed from a piece of cable, and the member for hooking the catch is in the form of a hook placed on a cylindrical base.

8. The tarpaulin tightening system according to claim 1 **wherein** the tarpaulin (1) has more than one catch (3), and the clamping tube channel (5a) comprises more than one member for hooking the catch, preferably in a number equal to the number of catches (3), in particular more than one pin (7).

9. The tarpaulin tightening system according to claim 2 **wherein** the pin (7) arranged in the clamping tube channel (5a) has a pin core (10) terminated by a chamfered or rounded pin tip (8).

10. The tarpaulin tightening system according to claim 9 **wherein** the pin (7) is positioned in the clamping tube channel (5a) with the pin tip (8) facing up.

11. The tarpaulin tightening system according to claim 9 **wherein** the pin (7) is positioned in the clamping tube channel (5a) with the pin tip (8) pointing downwards.

12. The tarpaulin tightening system according to any of the foregoing claims **wherein** the catch (3) is made of plastic, in particular of a material identical to the material from which the tarpaulin (1) is made.

13. The tarpaulin tightening system according to claim 1 **wherein** the catch (3) is made as an integral part of the tarpaulin (1), in particular in the form of a loop made of a steel cable.

14. The tarpaulin tightening system according to claim 1 **wherein** the catch (3) is made of a cable threaded through openings arranged along the end of the tarpaulin (4), and the clamping tube channel (5a) comprises more than one member for hooking the catch, in the form of a hook placed on the cylindrical base.

15. A transport semi-trailer provided with a tarpaulin covering the loading space **wherein** it has a tarpaulin tightening system according to any claim from 1 to 16, and preferably it has a raised roof.
